# FASCICULE DE BREVET EUROPEEN

(11) **EP 0 865 410 B1**
(45) Date de publication et mention de la délivrance du brevet: **04.04.2001**
(21) Numéro de dépôt: 96939155.6
(22) Date de dépôt: 22.11.1996
(51) Int. Cl.: B68C 1/12, D04H 3/00, B32B 7/04, B32B 5/24

(54) **ARTICLES JETABLES ET ABSORBANTS**
ABSORBIERENDE WEGWERFARTIKELN
DISPOSABLE ABSORBENT ARTICLES

(30) Priorité: 22.11.1995 FR 9514271
(43) Date de publication de la demande: 23.09.1998
(73) Titulaire: Sweet Horse International, 13090 Aix-en-Provence (FR)
(72) Inventeur: LYON, Marie-Françoise, F-13090 Aix-en-Provence (FR)
(74) Mandataire: Tilloy, Anne-Marie
(86) Numéro de dépôt international: FR9601835
(87) Numéro de publication internationale: WO9719017

(56) Documents cités:
- FR-A- 2 519 297
- GB-A- 1 347 797

## Description

La présente invention concerne des articles jetables et absorbant la transpiration.

Ces articles sont plus particulièrement destinés à absorber la transpiration d'origine animale, et peuvent être, notamment:
. des tapis de selle servant à isoler la selle ou les tapis intercalés de la sueur, et à protéger l'animal, tel que le cheval ou le poney, des frottements de la selle ;
. des tapis ou dossards servant à identifier les chiens de courses ou les chevaux attelés de compétitions, comme les chevaux de trait;
. des fourreaux de sangles pour les chevaux et les chiens;
. des fourreaux pour pièces de harnachement diverses ;
. des housses pour éléments ou coussins amortisseurs, placés sous la selle, et destinés à soulager le dos du cheval monté.
. des tapis protège-reins d'entraînement, destinés à protéger l'animal des frottements de la selle et à couvrir ses reins en absorbant la sueur et en l'isolant du froid ;
. des chemises anti-transpiration destinées aux animaux pour absorber la sueur après l'effort et protéger les animaux des courants d'air.

Traditionnellement, on isole la selle du dos du cheval transpirant par un simple rectangle d'étoffe appelé "torchon de selle" ou par un tapis plus épais en peau de mouton, en feutre, en tissu matelassé, ou bien encore par une épaisse couverture de laine repliée.

Ces tapis de selle présentent de nombreux inconvénients, qui souvent se cumulent :
(a) des problèmes d'entretien : il faut laver fréquemment, voire après chaque monte les tapis afin d'éliminer les poils et la sueur qui, en séchant, risquent d'entraîner des irritations par frottements. Par ailleurs, l'épaisseur des tapis peut rendre le nettoyage difficile et le séchage très long. Enfin, cet entretien implique un coût de lavage ainsi que du personnel mobilisé pour le faire.
(b) des problèmes d'usure : les tapis, brûlés par la sueur s'ils ne sont pas lavés régulièrement, ou par les détergents s'ils le sont, s'usent rapidement. Il en résulte une perte d'efficacité des tapis, qui peuvent être, alors, traversés par des quantités importantes de sueur qu'un animal comme le cheval peut éliminer. Dès lors, la selle est mouillée, salie, abîmée, ce problème étant en outre amplifié par les chocs et pressions provoqués par le poids et la position du cavalier.
(c) des problèmes d'hygiène : lors du transfert d'un tapis utilisé sans être nettoyé d'un animal à un autre, on a constaté la propagation de maladies de peau, telles que la teigne, la galle ou autres parasites.

En conséquence :
- les animaux sont mal protégés et souvent sujets à des blessures occasionnées par les frottements de la selle ;
- il y a un risque important de propagation de maladies de peau ;
- la selle est mal protégée de la transpiration de l'animal qui brûle le cuir.

Pour remédier à ces inconvénients, le brevet US 3,466,852 propose un tapis de selle jetable, de structure lamellaire, comprenant un film plastique imperméable associé à une ou deux feuilles de papier gaufré, l'une de ces feuilles de papier gaufré étant destinée à venir en contact avec l'animal. Mais, ce tapis de selle n'est pas satisfaisant pour les raisons qui suivent :
- le pouvoir absorbant de tels tapis est le plus souvent insuffisant ;
- les feuilles de papier de ces tapis ont tendance à se détériorer lorsqu'elles sont imprégnées de sueur ;
- enfin, de tels tapis manquent de souplesse et, dès lors, ne procurent pas de confort pour le cheval.

Antérieurement déjà, un tapis de selle multicouches avait été décrit dans le brevet US 604,567 (Mc Clain). Ce tapis comprend, en partant de la surface en contact avec l'animal :
. une couche extérieure lisse ;
. une couche absorbante en éponge ;
. une couche imperméable à l'eau ;
. une couche faite dans une matière classique de tapis de selle ;
. une couche extérieure lisse.

Le brevet US 4, 695, 496 décrit également un article absorbant multicouches pour protéger la peau, cet article comprenant, en partant de la surface en contact avec la peau d'une personne ou du dos du cheval ou d'un autre animal :
. une première couche faite avec des fibres hydrophobes devant capter et retenir l'humidité et la transpiration du côté de la face intérieure de cette couche ;
. une membrane semi-perméable permettant le passage de l'humidité et de la sueur uniquement de la couche de fibres hydrophobes vers la couche suivante ;
. cette couche suivante étant constituée d'une mousse capable d'absorber de l'eau et d'amortir les chocs ;
. éventuellement, une couche imperméable.

Mais, cet article absorbant multicouches est complexe et plutôt onéreux et, dès lors, il ne peut raisonnablement pas être envisager de le jeter après un ou plusieurs usages.

Le brevet FR-A-2 519 297 divulgue un autre type d'article absorbant la transpiration mais qui n'est pas jetable.

La présente invention a donc pour principal objectif d'éliminer les inconvénients précités en fournissant des articles absorbant la transpiration qui permettent de protéger aussi bien l'animal que les cuirs de sellerie, ces articles devant, dès lors, retenir la sueur absorbée, même si on exerce une pression ou une déformation quelconque dans les conditions normales d'utilisation.

Egalement, un autre objectif important de l'invention est de fournir des articles absorbant la transpiration qui soient d'un coût suffisamment bas pour pouvoir être jetés après un ou plusieurs usages, de manière à supprimer la nécessité d'un entretien ainsi que les risques d'infection entre animaux et à assurer une meilleure hygiène.

Pour atteindre ces objectifs, la présente invention propose des articles jetables et absorbant la transpiration d'origine animale comprenant une couche absorbante composée :
(i) d'au moins un non-tissé et/ou au moins un matelas de fibres, ce tissu non-tissé et ce matelas de fibres permettant la diffusion des liquides ; ou
(ii) d'une couche d'épaisseur au moins égale à 1 mm et de grammage au moins égal à 90 g/m² constituée de fibres absorbant la transpiration et permettant la diffusion des liquides, ces fibres absorbant la transpiration étant au moins partiellement liées entre elles.

Ces articles sont caractérisés en ce que :
- la couche absorbante présente une capacité minimale d'absorption de 150 g/m² de sueur (sous la pression occasionnée par le poids d'un cavalier ou sans pression) et comprend une ou plusieurs substances de nature différente, désignées sous le vocable de "superabsorbants" (hydrorétenteurs) ;
- ils comprennent, en outre, au moins une couche de renfort pour assurer la solidité des articles lors de leur utilisation, cette couche de renfort pouvant être constituée d'un film ou d'une couche de non-tissé ou bien d'une couche imperméable aux liquides.

Selon une première variante, la couche absorbante est composée d'au moins un non-tissé et/ou au moins un matelas de fibres capables d'absorber la transpiration, par exemple des fibres en cellulose ou en viscose.
Selon une autre variante, la couche d'épaisseur au moins égale à 1 mm et de grammage au moins égal à 90 g/m2 est constituée de fibres absorbant la transpiration et permettant la diffusion des liquides qui sont en cellulose ou en viscose.

La liaison partielle des fibres dans la couche absorbante selon la variante (ii) est de préférence obtenue thermiquement au moyen de fibres synthétiques thermofusibles, par exemple des fibres en polyéthylène ou des fibres en polypropylène, ou un mélange de ces deux types de fibres.

De préférence, les articles jetables et absorbants selon la présente invention sont utilisés de sorte que la couche absorbante soit en contact avec l'animal et la couche de renfort soit intercalée entre la couche absorbante et les cuirs de sellerie. Une telle disposition des articles jetables et absorbants selon la présente invention est impérative quand la couche de renfort est constituée par une couche imperméable aux liquides.

L'un des constituants essentiels des articles jetables et absorbant la transpiration selon la présente invention est une couche absorbante. Avantageusement, la capacité d'absorption de transpiration de cette couche est de l'ordre de 500 g/m² de la couche absorbante ou supérieure.

Conformément à un premier mode de réalisation de l'invention, la couche absorbante est constituée d'un ou plusieurs superabsorbants de nature différente (hydrorétenteurs) et d'au moins un non-tissé et/ou au moins un matelas de fibres de préférence des fibres capables d'absorber la transpiration, par exemple des fibres en cellulose ou en viscose, ce tissu non-tissé et ce matelas de fibres permettant la diffusion des liquides.

Par superabsorbant, on entend généralement des composés constitués de chaînes de polymères hydrophiles portant généralement des charges ioniques ou des fibres végétales qui, ajoutés dans l'eau, gonflent jusqu'à prendre la consistance d'un gel et augmentent de volume de façon importante. Ainsi, les superabsorbants peuvent gélifier de grandes quantités de liquides généralement de l'ordre de 10 à 30 fois leur volume, dans un temps relativement court, de l'ordre de quelques minutes. Les gels ainsi obtenus ont également la propriété de désorber difficilement le liquide absorbé si on exerce une pression ou une déformation raisonnable.

A titre d'exemple de superabsorbants bien connus, pouvant être utilisés dans le cadre de la présente invention, on peut citer des polymères ou des copolymères synthétiques obtenus à partir de monomères vinyliques ou acryliques, tels que les acrylates, les méthacrylates, l'acrylamide, etc; des dérivés naturels comme les alginates, les carraghénanes ; des fibres végétales telles que les sphaignes et l'agar agar ; et les produits issus de la modification chimique de la cellulose ou de l'amidon, comme les carboxyméthylcelluloses réticulés et les amidons greffés acryliques. Peuvent également convenir, des produits superabsorbants obtenus par modification chimique (hydrolyse alcaline ou acide, sulfonation) ou par modification physique (thermique ou mécanique) de polymères acryliques ou styréniques.

Dans le cadre de ce premier mode de réalisation de l'invention, la quantité de superabsorbants est de préférence au moins égale à 1 g/m² de l'article jetable.

De préférence, le poids de superabsorbants par unité de surface de l'article jetable et absorbant sera au moins égal à 2 g/m² et, de préférence encore, n'excédera pas 12 g/m². Encore mieux, ce poids sera de l'ordre de 3 à 4 g/m².

Selon le premier mode de réalisation de la présente invention, les superabsorbants sont associés à au moins un non-tissé et/ou à au moins un matelas de fibres, de préférence des fibres capables d'absorber la transpiration.

Selon une première variante de ce mode de réalisation de l'invention, le (ou les) non-tissé(s) et/ou le (ou les) matelas de fibres est :
- disposé sur une couche constituée de superabsorbants,
- et fixé, pour partie au moins, par exemple par thermoliage ou collage, à cette couche de superabsorbants.

Dès lors, les superabsorbants sont intercalés entre la couche de renfort et le (ou les) non-tissés(s) et/ou le (ou les) matelas de fibres.

Dans un tel cas de figure, les superabsorbants peuvent être sous des formes diverses, telles que film, particules, ou poudre, éventuellement combinée à un matériau particulaire naturel ou synthétique, par exemple des fibres de polypropylène, des débris de végétaux broyés, des matériaux synthétiques déchiquetés, de la viscose et de la pâte à papier défibré.

Selon une variante préférée du premier mode de réalisation de l'invention, le ou les superabsorbants sont mélangés physiquement à au moins un tissu non-tissé et/ou un matelas de fibres, le tissu non tissé et le matelas de fibres permettant la diffusion des liquides comme la transpiration. De préférence, le tissu non tissé et le matelas de fibres sont, en outre, capables d'absorber la transpiration. En d'autres termes, le ou les superabsorbants sont distribués dans au moins un tissu non-tissé et/ou un matelas de fibres, permettant la diffusion des liquides comme la transpiration. Egalement, on recommande que le matelas de fibres ou le tissu non-tissé soit réalisé dans un matériau anallergique.

Pour ce faire, on peut choisir :
- un matelas de fibres de cellulose et/ou des fibres en viscose (telles que des feuilles de ouate de cellulose) absorbant la transpiration et permettant la diffusion des liquides, comprenant en outre des fibres liées entre elles au moins partiellement. De préférence, les fibres liées entre elles au moins partiellement sont des fibres thermofusibles et thermoliées. De préférence encore, ces fibres sont en polyéthylène et/ou en polypropylène. Des performances satisfaisantes ont été atteintes avec des matelas de fibres absorbant la transpiration, permettant la diffusion des liquides et dont la résistance à l'étirement est de l'ordre de 9N/50 mm ou supérieure selon la norme EDANA.
- ou au moins un tissu non-tissé permettant la diffusion des liquides, en polypropylène et/ou en viscose.
- ou bien encore, un matelas de fibres de cellulose et/ou des fibres en viscose (telles que des feuilles de ouate de cellulose)absorbant la transpiration et permettant la diffusion des liquides, comprenant en outre des fibres liées entre elles au moins partiellement, ce matelas étant combiné à un tissu non-tissé permettant la diffusion des liquides, en polypropylène et/ou en viscose. De préférence, les fibres liées entre elles au moins partiellement sont des fibres thermofusibles et thermoliées. De préférence encore, ces fibres sont en polyéthylène et/ou en polypropylène.

Dans ces conditions, l'incorporation du superabsorbant peut se faire, par exemple en plaçant le superabsorbant entre des feuilles de ouate de cellulose ou en contrecollant les particules de superabsorbant à la feuille de ouate de cellulose ou en mélangeant le superabsorbant avec des fibres (de viscose par exemple), ou bien encore en le mélangeant avec des fibres (en viscose ou en cellulose par exemple) et en distribuant ce mélange entre des feuilles de ouate de cellulose. De préférence, le ou les superabsorbants sont prévus dans le tiers supérieur de la couche absorbante et éloigné de la surface en contact avec l'animal.

Selon la nature chimique du matériau employé pour réaliser le matelas de fibres ou le tissu non-tissé et selon sa structure, le poids de ce matelas ou tissu, par unité de surface de l'article jetable et absorbant, peut varier dans de larges limites. Ainsi, si la couche absorbante dans laquelle le ou les superabsorbants sont distribués se compose d'un matelas fait de fibres, liées entre elles, de préférence par voie thermique, en polyéthylène et en polypropylène, ce matelas renfermant en outre des fibres de cellulose, son poids est au minimum de 80 g/m² de l'article, de préférence au moins égal à 90 g/m². Le poids de matelas de fibres peut atteindre 150 g/m², voire être supérieur En revanche, si la matrice absorbante dans laquelle le ou les superabsorbants sont distribués est un tissu non-tissé, le poids minimum de tissu non-tissé à prévoir est de 30 g/m² de l'article. De préférence, ce poids sera au moins égal à 50 g/m². Le poids de ce tissu non-tissé peut atteindre 75 g/m² de l'article jetable et absorbant, voire être supérieur.

De préférence, le superabsorbant, quand il est distribué dans au moins un tissu non-tissé et/ou un matelas de fibres, est sous forme de particules dont les dimensions sont avantageusement comprises entre 225 microns et 500 microns.

Conformément à un second mode de réalisation de la présente invention, la couche absorbante est constituée d'une couche d'épaisseur au moins égale à 1 mm et de grammage au moins égal à 90 g/m² constituée de fibres de préférence des fibres en cellulose ou en viscose absorbant la transpiration, ces fibres absorbant la transpiration étant liées entre elles, au moins partiellement. De préférence, ces fibres sont thermoliées au moyen de fibres synthétiques thermofusibles, par exemple des fibres en polyéthylène ou des fibres en polypropylène, ou encore un mélange de ces deux types de fibres. En outre, cette couche absorbante ou matelas de fibres doit permettre la diffusion des liquides.

Avantageusement, la couche absorbante selon ce second mode de réalisation remplit une ou plusieurs des caractéristiques qui suivent :
(a) l'épaisseur de la couche absorbante est de préférence supérieure à 1,4 mm, de préférence encore de l'ordre de 1,5-2 mm, voire supérieure.
(b) le grammage de la couche absorbante est de préférence de l'ordre de 150 g/m², voire supérieur. De préférence, ce grammage n'excède pas 200 g/m².
(c) la couche absorbante comprend un ou des superabsorbants. La quantité de superabsorbants peut être, dans ce cas, inférieure à 1 g/m².
(d) le ou les superabsorbants peuvent être uniformément répartis dans le matelas ou prévus au centre du matelas. De préférence, ils sont prévus dans le 1/3 supérieur du matelas et éloigné de la surface en contact avec l'animal.
(e) la couche absorbante est constituée de préférence d'au moins deux nappes fibreuses superposées et liées entre elles, ou encore de l'ordre de 3-4 nappes fibreuses liées entre elles.
(f) sur la face externe de la couche absorbante, prévue pour être mise au contact de l'animal, est prévu un voile perméable aux liquides, de fibres synthétiques thermofusibles de préférence en polyéthylène. La fonction essentielle de ce voile, qui est lié thermiquement à la couche absorbante, est d'améliorer sa résistance au frottement.
(g) la résistance à l'étirement de la couche absorbante est de l'ordre de 9N/50 mm ou supérieure selon la norme EDANA.

Des performances très satisfaisantes ont été atteintes avec un tapis de selle remplissant à la fois les caractéristiques (a), (b), (e), (f) et (g) et comprenant, en outre, laminé sur la couche absorbante, un film imperméable à l'eau, en polyéthylène, de 19 g/m² de tapis.

Une autre caractéristique essentielle de la présente invention réside dans la présence d'une couche de renfort pour assurer la solidité des articles lors de leur utilisation, en particulier pour augmenter la résistance aux frottements des articles jetables et absorbants et, ainsi, éviter leur déchirement lors d'une utilisation normale. De préférence, la couche de renfort est constituée par une couche imperméable aux liquides pour isoler les cuirs de sellerie de la transpiration de l'animal.

La nature chimique précise de la couche imperméable aux liquides n'est pas critique sous réserve qu'elle conduise à une couche externe imperméable aux liquides tels que la transpiration et que cette couche conserve son caractère d'étanchéité aux liquides lors d'un usage normal. Ainsi, cette couche peut être faite dans un matériau thermoplastique étanche tel qu'un caoutchouc naturel ou synthétique ou un film continu en matériau thermoplastique comme le polyéthylène ou le polypropylène. Cette couche imperméable aux liquides peut se présenter sous la forme d'une ou plusieurs feuilles superposées en matériau thermoplastique, au moins partiellement fixées entre elles. Egalement, la couche imperméable peut être faite :
- dans un tissu non-tissé imperméabilisé tel qu'un tissu non-tissé laminé constitué d'un tissu non tissé en polypropylène sur lequel est couché du polyéthylène, avantageusement à raison d'au moins 15 g/m² de polyéthylène.
- ou dans un film microperforé en matériau thermoplastique comme le polypropylène ou le polyéthylène, ce film microperforé étant imperméable aux liquides aqueux comme la sueur, grâce à son caractère hydrophobe, mais perméable aux gaz pour favoriser la ventilation des parties couvertes de l'animal.

A cet égard, pour que cette couche imperméable résiste aux contraintes d'usage normal (telles que des frottements, étirements, etc.), sans perte notable de ses caractéristiques d'étanchéité, cette couche doit présenter une résistance mécanique suffisante en traction et au frottement (charge à la rupture) de l'ordre de 14,1 N/inch (5,5 N/cm) ou supérieure dans le sens machine et de l'ordre de 9,7 N/inch (3,8 N/cm) ou supérieure dans le sens transversal, selon la norme ASTM D.882.

Selon la nature chimique de la couche externe imperméable aux liauides, ainsi que sa structure, le poids minimum de cette couche, à prévoir par unité de surface de l'article jetable et absorbant, pour garantir une bonne étanchéité vis-à-vis des liquides, peut varier dans de larges limites.

A titre d'exemple, si cette couche imperméable est sous la forme d'une feuille de polyéthylène, il est souhaitable de prévoir un poids minimum de 15 g/m² de l'article, de préférence compris entre 18 et 40 g/m² de l'article. De préférence, la couche imperméable présente un aspect tissu ou, en tout cas, est faite avec un polyéthylène mat et non glissant.

Selon une variante avantageuse de l'invention, sur la couche externe imperméable est fixé un tissu non-tissé ou un tissu tissé, pouvant être façonné (par exemple gaufré).

Selon une autre variante avantageuse, la couche externe des articles jetables et absorbants selon l'invention, qui sera, selon le cas, constituée par la couche de renfort elle-même ou, comme évoqué ci-dessus, un tissu non-tissé ou tissé, est :
- blanche ou colorée, et/ou
- de couleur unie ou imprimée, et/ou
- personnalisée par impression de textes et/ou de dessins, par exemple à des fins publicitaires, et/ou
- enduite, en totalité ou partiellement, d'une fine couche d'une substance auto-adhésive autorisant des décollages répétés, ceci afin d'éviter le glissement de l'article absorbant et jetable, etc.

Ce tissu, tissé ou non, est de préférence en polypropylène ou en viscose. De préférence encore, le poids minimum de ce tissu par unité de surface des articles jetables et absorbants est de 17 g/m² et, encore mieux il n'excède pas 26 g/m².

Pour augmenter la cohésion, ainsi que les caractéristiques mécaniques de l'ensemble formant l'article jetable et absorbant selon la présente invention, avantageusement, on peut prévoir de placer sur la couche absorbante un tissu non-tissé supplémentaire. Comme ce tissu non-tissé est destiné à venir en contact avec l'animal, on choisit un tissu non tissé qui laisse passer la transpiration et qui soit capable de résister aux contraintes d'un usage normal, en particulier les frottements sur les poils.

A titre d'exemple de matériau pouvant convenir à la fabrication de ce tissu non-tissé, on peut citer des fibres en polypropylène ou en viscose, en polyester ou polyéthylène, ce dernier étant obtenu par projection de fibres continues de polyéthylène. De préférence, on utilise des fibres naturelles en viscose ou en coton pour éviter les problèmes d'allergies cutanées.

Avantageusement, les articles jetables et absorbants selon la présente invention peuvent également servir de support à certains produits médicamenteux à usage vétérinaire qui pourront ainsi diffuser favorablement, grâce à l'échauffement du dos de l'animal, pénétrer de manière cutanée et avoir un effet thérapeutique. A cet effet, on pourra utiliser des produits de synthèse ou issus de la phytothérapie. Pour ce faire, on pourra imprégner :
- la couche absorbante, de préférence la partie de cette couche qui sera la plus proche de la peau de l'animal;
- ou encore, si il existe, le tissu non-tissé prévu sur la couche absorbante.

A titre d'exemple de médicaments à pénétration cutanée pouvant être associés aux articles jetables et absorbants selon la présente invention, on peut citer un agent myorelaxant (pouvant être sous la forme d'un gel), un agent anti-inflammatoire, un agent antalgique, un agent favorisant la circulation sanguine, ... Ces médicaments peuvent également être associés aux articles jetables et absorbants par imprégnation ou par pulvérisation de produits pulvérulents, lyophilisés ou liquides ou de microcapsules ou sous toute autre forme galénique.

Selon la destination, les articles jetables et absorbants selon la présente invention peuvent avoir des formes très variées. Ainsi, pour une utilisation en tant que tapis de selle, ils peuvent avoir une forme rectangulaire, une forme de selle et toutes les formes intermédiaires entre les deux formes précitées.

Egalement, on peut les présenter en paquets d'articles déjà individualisés ou en rouleaux d'articles prédécoupés.

Les articles jetables et absorbants selon la présente invention peuvent être préparés comme suit :
- la couche absorbante, décrite ci-dessus, dans laquelle, selon le cas, a été incorporé un ou plusieurs superabsorbants est placée contre la couche externe de renfort, détaillée ci-dessus,
- et le périmètre des bords est scellé par collage ou thermoliage afin d'éviter les fuites de liquide et donner une cohésion à l'article.

Bien entendu, l'invention n'est pas limitée aux modes d'exécution décrits ci-dessus, pour lesquels on pourra prévoir d'autres variantes sans pour cela sortir du cadre des revendications annexées.

## Revendications

1. Articles jetables et absorbant la transpiration d'origine animale comprenant une couche absorbante composée:
(i) d'au moins un tissu non-tissé et/ou au moins un matelas de fibres, ce tissu non-tissé et ce matelas de fibres permettant la diffusion des liquides, ou
(ii) d'une couche d'épaisseur au moins égale à 1 mm et de grammage au moins égal à 90 g/m² constituée de fibres absorbant la transpiration, ces fibres absorbant la transpiration étant au moins partiellement liées entre elles,
ces articles étant caractérisés en ce que :
- il comprennent en outre au moins une couche de renfort pour assurer la solidité des articles lors de leur utilisation, cette couche pouvant être un film ou une couche de non-tissé, ou bien une couche imperméable aux liquides,
- la couche absorbante présente une capacité minimale d'absorption de 150 g/m² de sueur et comprend un ou plusieurs superabsorbants de nature différente.

2. Articles selon la revendication 1, caractérisés en ce que la capacité minimale d'absorption de la couche absorbante est de l'ordre de 500 g/m² ou supérieure.

3. Articles selon la revendication 1 ou 2, caractérisés en ce que le non-tissé ou le matelas de fibre est :
- disposé sur une couche constituée de superabsorbants,
- et fixé, pour partie au moins, à cette couche de superabsorbants.

4. Articles selon la revendication 1 ou 2, caractérisés en ce que le ou les superabsorbants sont mélangés physiquement à au moins un tissu non-tissé et/ou un matelas de fibres.

5. Articles selon la revendication 3 ou 4, caractérisés en ce que le matelas est constitué de fibres de cellulose et/ou des fibres en viscose (telles que des feuilles de ouate de cellulose) absorbant la transpiration et permettant la diffusion des liquides et comprend en outre des fibres liées entre elles au moins partiellement, ces fibres étant des fibres thermofusibles et thermoliées en polyéthylène et/ou en polypropylène.

6. Articles selon la revendication 3 ou 4, caractérisés en ce que le tissu non-tissé de la couche absorbante est en polypropylène et/ou en viscose.

7. Articles selon la revendication 3 ou 4, caractérisés en ce que on utilise un matelas constitué de fibres de cellulose et/ou des fibres en viscose (telles que des feuilles de ouate de cellulose) absorbant la transpiration et permettant la diffusion des liquides comprenant en outre des fibres liées entre elles au moins partiellement, ces fibres étant des fibres thermofusibles et thermoliées, en polyéthylène et/ou en polypropylène;, ce matelas étant combiné à un tissu non-tissé permettant la diffusion des liquides, en polypropylène et/ou en viscose.

8. Articles selon la revendication 5, caractérisés par le fait que, si la couche absorbante dans laquelle le ou les superabsorbants sont distribués se compose d'un matelas fait de fibres thermoliées en polyéthylène et en polypropylène, renfermant, en outre, des fibres de cellulose, son poids est au minimum de 80 g/m² de l'article.

9. Articles selon la revendication 3, 4 ou 6, caractérisés par le fait que, si la couche absorbante dans laquelle ou les superabsorbants sont distribués est un tissu non-tissé, le poids minimum de tissu non-tissé à prévoir est de 30 g/m² de l'article.

10. Articles selon l'une des revendications 1 à 9, caractérisés par le fait que le superabsorbant, quand il est distribué dans au moins un tissu non-tissé et/ou un matelas de fibres, est sous forme de particules dont les dimensions sont avantageusement comprises entre 225 microns et 500 microns.

11. Articles selon l'une des revendications précédentes, caractérisés en ce que la couche imperméable aux liquides est faite dans un matériau thermoplastique étanche tel que du polyéthylène ou un tissu non-tissé imperméabilisé.

12. Articles selon l'une des revendications précédentes, caractérisés en ce que la couche imperméable présente une résistance mécanique suffisante en traction et au frottement, de l'ordre de 5,5 N/cm ou supérieure dans le sens machine et 3,8 N/cm ou supérieure dans le sens transversal, selon la norme ASTM D.882.

13. Articles selon la revendication 1, caractérisés en ce que la couche absorbante est une couche d'épaisseur au moins égale à 1 mm et de grammage au moins égal à 90 g/m² et est constituée de fibres absorbant la transpiration, ces fibres absorbant la transpiration étant au moins partiellement liées entre elles par voie thermique au moyen de fibres synthétiques thermofusibles, par exemple des fibres en polyéthylène ou des fibres en polypropylène ou un mélange de ces deux types de fibres.

14. Articles selon la revendication 1 ou 13, caractérisés en ce que la couche absorbante est une couche d'épaisseur au moins égale à 1,4 mm et de grammage au moins égal à 90 g/m² et est constituée de fibres en cellulose ou en viscose absorbant la transpiration, ces fibres absorbant la transpiration étant liées entre elles au moins partiellement par voie thermique au moyen de fibres synthétiques thermofusibles, par exemple des fibres en polyéthylène ou des fibres en polypropylène ou encore un mélange de ces deux types de fibres.

15. Articles selon la revendication 13 ou 14, caractérisés en ce que l'épaisseur de la couche absorbante est de l'ordre de 1,5 à 2 mm, voire supérieure.

16. Articles selon la revendication 13, 14 ou 15, caractérisés en ce que le grammage de la couche absorbante est de l'ordre de 150 g/m², voire supérieur.

17. Articles selon l'une des revendications 13 à 16, caractérisés en ce que la couche absorbante comprend un ou des superabsorbants.

18. Articles selon la revendication 17, caractérisés en ce que le ou les superabsorbants peuvent être uniformément répartis dans le matelas ou prévus au centre du matelas.

19. Articles selon la revendication 17, caractérisés en ce que le ou les superabsorbants sont prévus dans le tiers supérieur du matelas et éloigné de la surface en contact avec l'animal.

20. Articles selon la revendication 13 ou 14, caractérisés en ce que la couche absorbante est constituée d'au moins deux nappes fibreuses superposées et liées entre elles ou de l'ordre de 3-4 nappes fibreuses liées entre elles.

21. Articles selon la revendication 13 ou 14, caractérisés en ce que, sur la face externe de la couche absorbante, prévue pour être mise au contact de l'animal, est prévu un voile perméable aux liquides de fibres synthétiques thermofusibles en polyéthylène.

22. Articles selon l'une quelconque des revendications précédentes, caractérisés en ce que, sur la couche imperméable aux liquides, est fixé un tissu non-tissé ou un tissu tissé, pouvant être façonné (par exemple gaufré).

23. Articles selon l'une des revendications 1 à 22, caractérisés en ce que la couche externe, qui est constituée, selon le cas, par la couche de renfort ou le tissu (tissé ou non), est :
- blanche ou colorée, et/ou
- de couleur unie ou imprimée, et/ou
- personnalisée par impression de textes et/ou de dessins, et/ou
- enduite, en totalité ou partiellement, d'une fine couche d'une substance auto-adhésive autorisant des décollages répétés, ceci afin d'éviter le glissement de l'article absorbant et jetable.

24. Articles selon l'une quelconque des revendications précédentes, caractérisés en ce que, pour augmenter la cohésion, ainsi que les caractéristiques mécaniques de l'ensemble formant les articles jetables et absorbants, on prévoit de placer sur la couche absorbante un tissu non-tissé qui laisse passer la transpiration et qui soit capable de résister aux contraintes d'un usage normal, en particulier les frottements sur les poils.

25. Articles selon l'une quelconque des revendications précédentes, caractérisés en ce que on leur associe des produits médicamenteux à usage vétérinaire.

## Claims

1. Disposable articles absorbing animal perspiration including an absorbent layer composed of:
(i) at least one non-woven fabric and/or at least one pad of fibres, this non-woven fabric and this pad of fibres allowing liquid diffusion;
or
(ii) a layer with a thickness at least equal to 1 mm and with a weight at least equal to 90 g/m2 made out of fibres absorbing perspiration, these fibres absorbing perspiration being, at least partly, tied one with another.
these articles being characterised in that:
- they also include at least one reinforcing layer in order to insure articles strength during use, this layer being a film or a non-woven fabric layer, or being a liquid-tight layer.
- the absorbent layer has a minimal absorption capacity of 150 g/m² of perspiration and is composed of one or several superabsorbent(s) of different nature.

2. Articles according to claim 1, characterised in that the minimal absorption capacity of the absorbent layer is around 500 g/m² or higher.

3. Articles according to claim 1 or 2, characterised in that the non-woven fabric or the pad of fibres is:
- set onto a layer made out of superabsorbents,
- and fixed, at least partly, to this layer of superabsorbents.

4. Articles according to claim 1 or 2, characterised in that the superabsorbent(s) is (are) physically mixed to at least one non-woven fabric and/or a pad of fibres.

5. Articles according to claim 3 or 4, characterised in that the pad is made out of cellulose and/or viscose fibres (such as cellulose cotton wool sheets) absorbing perspiration and allowing liquid diffusion and also includes fibres tied one with another, at least partly, these fibres being thermo-fusible and thermally tied fibres, which are polyethylene and/or polypropylene fibres.

6. Articles according to claim 3 or 4, characterised in that the non-woven fabric of the absorbent layer is made of polypropylene and/or viscose.

7. Articles according to claim 3 or 4, characterised in that a pad, made out of cellulose and/or viscose fibres (such as cellulose cotton wool sheets) absorbing perspiration and allowing liquid diffusion, is used, which also includes fibres tied one with another, at least partly, these fibres being thermo-fusible and thermally tied fibres which are polyethylene and/or polypropylene fibres, this pad being combined with a non-woven fabric allowing liquid diffusion and being polypropylene and/or viscose material.

8. Articles according to claim 5, characterised in that, if the absorbent layer, into which the superabsorbent(s) has (have) been distributed, is made out of a pad made with thermally tied fibres, which are polyethylene and polypropylene fibres and which includes also cellulose fibres, its weight is a minimum of 80 g/m² of the article.

9. Articles according to claim 3, 4 or 6, characterised in that, if the absorbent layer into which the superabsorbent(s) has (have) been distributed is made of a non-woven fabric, the minimum weight of the non-woven fabric allowed is 30 g/m² of the article.

10. Articles according to one of claims 1 to 9, characterised by the fact that when distributed into at least one non-woven fabric and/or a pad of fibres, the superabsorbent takes the shape of particles which dimensions are advantageously comprised between 225 microns and 500 microns.

11. Articles according to one of the preceding claims, characterised in that the liquid-tight layer is made of tight thermo-plastic material such as polyethylene or a non-woven and proofed fabric.

12. Articles according to one of the preceding claims, characterised in that the liquid-tight layer offers sufficient mechanical tensile strength and resistance to friction, around 5,5 N/cm or higher in machine direction and 3,8 N/cm or higher in transverse direction, according to the ASTM D.882 standard.

13. Articles according to claim 1, characterised in that the absorbent layer is a layer having a thickness of at least 1 mm and a weight at least equal to 90 g/m² and made out of fibres absorbing perspiration, these fibres absorbing perspiration being thermally tied one with another, at least partly, by synthetic thermo-fusible fibres, for instance polyethylene or polypropylene fibres, or a mixture of these two types of fibres.

14. Articles according to claims 1 to 13, characterised in that the absorbent layer is a layer having a thickness of at least 1,4 mm and a weight at least equal to 90 g/m² and made out of cellulose or viscose fibres absorbing perspiration, these fibres absorbing perspiration being thermally tied one with another, at least partly, by synthetic thermo-fusible fibres, for instance polyethylene or polypropylene fibres, or a mixture of these two types of fibres.

15. Articles according to claim 13 or 14, characterised in that the absorbent layer thickness is around 1,5 mm to 2 mm, or even higher.

16. Articles according to claim 13, 14 or 15 characterised in that the absorbent layer weight is around 150 g/m², or even higher.

17. Articles according to one of claims 13 to 16, characterised in that the absorbent layer includes one or several superabsorbents.

18. Articles according to claim 17, characterised in that the superabsorbent(s) may be uniformly distributed into the pad or allowed in the middle of the pad.

19. Articles according to claim 17, characterised in that the superabsorbent(s) is (are) allowed into the one third upper part of pad and is (are) far from the surface in contact with the animal.

20. Articles according to claim 13 or 14, characterised in that the absorbent layer is made out of at least two superposed fibrous layers, tied to each other, or 3-4 fibrous layers tied to each other.

21. Articles according to claim 13 or 14, characterised in that a film permeable to liquid, made out of synthetic thermo-fusible fibres, which are polyethylene fibres, is allowed onto the external side of the absorbent layer, allowed to be in contact with the animal.

22. Articles according to any one of the preceding claims, characterised in that a non-woven or woven fabric, which can be shaped (goffered for instance) is fixed onto the liquid-tight layer.

23. Articles according to one of claims 1 to 22, characterised in that the external layer, made out, depending on the case, of the reinforcing layer or of the (non-woven or woven) fabric, is:
- white or colourful, and/or
- plain or printed coloured, and/or
- given a personal touch by words and/or drawings printing, and/or
- wholly or partly coated with a thin layer of a self adhesive substance which allows repeated unsticking, this in order to avoid the disposable and absorbent articles to slide.

24. Articles according to any one of the preceding claims, characterised in that, in order to increase cohesion and mechanical characteristics of the set forming the disposable and absorbent articles, a non-woven fabric is allowed onto the absorbent layer, this now-woven fabric letting perspiration through and being able to resist normal use restraints, particularly such as chafing on the animal coat.

25. Articles according to any one of the preceding claims, characterised in that medicinal articles for veterinary use may be associated to them.

## Patentansprüche

1. Tierschweiß absorbierende Wegwerf-Artikel mit einer Absorptionsschicht, gebildet durch:
(i) wenigstens ein nichtgewebtes Textilerzeugnis und/oder wenigstens eine Fasermatte, wobei dieses nichtgewebte Textilerzeugnis und diese Fasermatte Flüssigkeiten durchlassen, oder
(ii) eine Schicht mit einer Dicke von wenigstens 1 mm und einer Flächenmasse von wenigstens 90 g/m², gebildet durch schweißabsorbierende Fasern, wobei diese schweißabsorbierenden Fasern wenigstens partiell miteinander verbunden sind;
dabei sind diese Artikel **dadurch gekennzeichnet:**
- dass sie außerdem wenigstens eine Verstärkungsschicht umfassen, um die Festigkeit der Artikel bei ihrer Benutzung zu gewährleisten, wobei diese Schicht eine Folie oder eine nichtgewebte Schicht oder auch eine für Flüssigkeiten undurchdringliche Schicht sein kann,
- dass die Absorptionsschicht eine Schweiß-Mindestabsorptionsfähigkeit von 150 g/m² hat und ein oder mehrere Superabsorptionsmittel unterschiedlicher Art umfasst.

2. Artikel nach Anspruch 1, dadurch gekennzeichnet, dass die Mindestabsorptionsfähigkeit der Absorptionsschicht in der Größenordnung von 500 g/m² oder darüber liegt.

3. Artikel nach Anspruch 1 oder 2, dadurch gekennzeichnet, dass das Nichtgewebte bzw. das Vlies oder die Fasermatte:
- von einer durch Superabsorptionsmittel gebildeten Schicht getragen wird,
- und wenigstens teilweise an dieser Superabsorptionsmittelschicht befestigt ist.

4. Artikel nach Anspruch 1 oder 2, dadurch gekennzeichnet, dass das oder die Superabsorptionsmittel wenigstens in einem nichtgewebten Textilerzeugnis und/oder einer Fasermatte physikalisch verteilt sind.

5. Artikel nach Anspruch 3 oder 4, dadurch gekennzeichnet, dass die Matte durch Zellstofffasern und/oder Viskosefasern (wie z.B. Zellstoffwatteblätter) gebildet wird, die den Schweiß aufsaugen und die Diffusion der Flüssigkeiten ermöglichen, und außerdem wenigstens partiell miteinander verbundene Fasern umfasst, wobei diese Fasern wärmeschmelzbare und thermoverschweißte Polyethylen- und/oder Polypropylenfasern sind.

6. Artikel nach Anspruch 3 oder 4, dadurch gekennzeichnet, dass das nichtgewebte Textilerzeugnis der Absorptionsschicht aus Polypropylen und/oder aus Viskose ist.

7. Artikel nach Anspruch 3 oder 4, dadurch gekennzeichnet, dass man eine Matte verwendet, die durch schweißabsorbierende Zellstofffasern und/oder Viskosefasern (wie z.B. Zellstoffwatteblätter) gebildet wird, die den Schweiß aufsaugen und die Diffusion der Flüssigkeiten ermöglichen, und die außerdem wenigstens partiell miteinander verbundene, wärmeschmelzbare und thermoverschweißte Fasern umfasst, wobei diese Fasern aus Polyethylen und/oder aus Polypropylen sind und diese Matte mit einem nichtgewebten, die Diffusion der Flüssigkeiten ermöglichenden Textilerzeugnis aus Polypropylen und/oder aus Viskose kombiniert ist.

8. Artikel nach Anspruch 5, dadurch gekennzeichnet, dass - wenn die Absorptionsschicht, in der das oder die Superabsorptionsmittel verteilt sind, aus einer Matte besteht, die durch thermoverschweißte Polyethylen- und Polypropylenfasern gebildet wird und außerdem Zellstofffasern umfasst, ihr Gewicht wenigstens 80 g/m² des Artikels ausmacht.

9. Artikel nach Anspruch 3, 4 oder 6, dadurch gekennzeichnet, dass - wenn die Absorptionsschicht, in der das oder die Superabsorptionsmittel verteilt sind, ein nichtgewebtes Textilerzeugnis ist, das vorzusehende Mindestgewicht des nichtgewebten Textilerzeugnisses 30 g/m² des Artikels ausmacht.

10. Artikel nach einem der Ansprüche 1 bis 9, dadurch gekennzeichnet, dass das Superabsorptionsmittel, wenn es in wenigstens einem nichtgewebten Textilerzeugnis und/oder einer Fasermatte verteilt ist, durch Partikel gebildet wird, die vorteilhaft zwischen 225 und 500 µm enthalten sind.

11. Artikel nach einem der vorangehenden Ansprüche, dadurch gekennzeichnet, dass die für Flüssigkeiten undurchdringliche Schicht durch ein dichtes thermoplastisches Material wie etwa Polyethylen oder ein undurchlässig gemachtes, nichtgewebtes Textilerzeugnis gebildet wird.

12. Artikel nach einem der vorangehenden Ansprüche, dadurch gekennzeichnet, dass die undurchdringliche Schicht eine ausreichende Zug- und Reibfestigkeit in der Größenordnung von 5,5 N/cm oder darüber in der Faserrichtung und von 3,8 N/cm oder darüber in der Querrichtung aufweist, entsprechend der Norm ASTM D.882.

13. Artikel nach Anspruch 1, dadurch gekennzeichnet, dass die Absorptionsschicht eine Schicht mit einer Dicke von wenigstens 1 mm und einer Flächenmasse von wenigstens 90 g/m² ist und durch schweißabsorbierende Fasem gebildet wird, wobei diese schweißabsorbierenden Fasern durch wärmeschmelzbare Kunststofffasern, z.B. Polyethylenfasern oder Polypropylenfasern oder auch einer Mischung aus diesen beiden Fasertypen durch ein thermisches Verfahren wenigstens partiell miteinander verbunden werden.

14. Artikel nach Anspruch 1 oder 13, dadurch gekennzeichnet, dass die Absorptionsschicht eine Schicht mit einer Dicke von wenigstens 1,4 mm und einer Flächenmasse von wenigstens 90 g/m² ist und durch schweißabsorbierende Zellstoff- oder Viskosefasern gebildet wird, wobei diese schweißabsorbierenden Fasern durch wärmeschmelzbare Kunststofffasern, z.B. Polyethylenfasern oder Polypropylenfasern oder auch einer Mischung aus diesen beiden Fasertypen durch ein thermisches Verfahren wenigstens partiell miteinander verbunden werden.

15. Artikel nach Anspruch 1 oder 13, dadurch gekennzeichnet, dass die Dicke der Absorptionsschicht in der Größenordnung von 1,5 bis 2 mm oder sogar darüber liegt.

16. Artikel nach Anspruch 13, 14 oder 15, dadurch gekennzeichnet, dass die Flächenmasse der Absorptionsschicht in der Größenordnung von 150 g/m² oder sogar darüber liegt.

17. Artikel nach einem der Ansprüche 13 bis 16, dadurch gekennzeichnet, dass die Absorptionsschicht ein oder mehrere Superabsorptionsmittel umfasst.

18. Artikel nach Anspruch 17, dadurch gekennzeichnet, dass das oder die Superabsorptionsmittel gleichmäßig in der Matte verteilt oder in der Mattenmitte vorgesehen sein können.

19. Artikel nach Anspruch 17, dadurch gekennzeichnet, dass das oder die Superabsorptionsmittel in dem von der Kontaktfläche mit dem Tier entfernten oberen Drittel der Matte vorgesehen sind.

20. Artikel nach Anspruch 13 oder 14, dadurch gekennzeichnet, dass die Absorptionsmittelschicht durch wenigstens zwei übereinanderliegende und miteinander verbundene Faserlagen oder 3 bis 4 miteinander verbundene Faserlagen gebildet wird.

21. Artikel nach Anspruch 13 oder 14, dadurch gekennzeichnet, dass auf der Außenseite der Absorptionsmittelschicht, die für den Kontakt mit dem Tier vorgesehen ist, ein für Flüssigkeiten durchlässiger Flor aus wärmeschmelzbaren Polyethylen-Kunststofffasern vorgesehen ist.

22. Artikel nach einem der vorhergehenden Ansprüche, dadurch gekennzeichnet, dass auf der Für Flüssigkeiten undurchdringlichen Schicht ein nichtgewebtes Textilerzeugnis oder ein gewebtes Textilerzeugnis befestigt ist, das geformt werden kann (z.B. gaufriert).

23. Artikel nach einem der Ansprüche 1 bis 22, dadurch gekennzeichnet, dass die Außenschicht, die je nach Fall durch die Verstärkungsschicht oder das Textilerzeugnis (gewebt oder nicht) gebildet wird:
- weiß oder farbig ist, und/oder
- einfarbig oder bedruckt ist, und/oder
- personalisiert ist durch das Aufdrucken von Texten und/oder Mustern, und/oder
- ganz oder teilweise beschichtet ist mit einer dünnen Schicht aus einer ein wiederholtes Ablösen zulassenden selbsthaftenden bzw. haftenden Substanz, die das Gleiten des absorbierenden Wegwerfartikels verhindert.

24. Artikel nach einem der vorangehenden Ansprüche, dadurch gekennzeichnet, dass man, um den Zusammenhalt sowie die mechanischen Eigenschaften des diese Artikel bildenden Aufbaus zu verbessern, auf der Absorptionsschicht ein nichtgewebtes Textilerzeugnis anbringt, das den Schweiß durchlässt und das die Beanspruchungen einer normalen Benutzung aushält, insbesondere die Reibungen mit den Tierhaaren.

25. Artikel nach einem der vorangehenden Ansprüche, dadurch gekennzeichnet, dass man sie mit Produkten des veterinärmedizinischen Gebrauchs versieht.
